# EUROPEAN PATENT APPLICATION

(11) **EP 4 617 482 A1**
(43) Date of publication of application: **17.09.2025**
(21) Application number: 25163239.4
(22) Date of filing: 12.03.2025
(51) Int. Cl.: F02C 3/22, F01D 25/32, F02C 3/30, F02C 7/224

(54) **HYDROGEN FUEL HEATING WITH OPEN LOOP WASTE HEAT RECOVERY CYCLE**

(30) Priority: 13.03.2024 US 202418603762
(71) Applicant: RTX Corporation, Farmington, CT 06032 (US)
(72) Inventor: TAYLOR, Stephen, Farmington, 06032 (US); TERWILLINGER, Neil, Farmington, 06032 (US); TURNEY, Joseph, Farmington, 06032 (US)
(74) Representative: Dehns

(57) **Abstract**

An aircraft propulsion system includes a fan section that is rotatable about an axis, a core engine (25) that includes a core flow path where a core airflow is compressed in a main compressor section (24), communicated to a combustor section (26), mixed with fuel (102), and ignited to generate an exhaust gas flow (78) that is expanded through a turbine section (28). The aircraft propulsion system includes a turbine section (28) that is coupled to drive the main compressor section (24) and the fan section (22) through an engine drive shaft, a fuel system (100) that is configured to generate a fuel flow (102) to the combustor (56), a water recovery system (76) where water from the exhaust gas flow (78) is condensed into a liquid and heated to generate a steam flow (80), and a flow conditioning system where heat from the steam flow (80) is communicated to the fuel flow (102) prior to injection of the fuel flow (102) into the combustor (56).

## Description

### TECHNICAL FIELD

The invention relates generally to a waste heat recovery cycle for a turbine engine that utilizes alternate fuels.

### BACKGROUND

A gas turbine engine operates by compressing air within a compressor section, delivering the compressed air to a combustion section where it is mixed with fuel and ignited to generate a high-energy exhaust gas flow that is used to drive a turbine section. Alternate fuels such as sustainable aviation fuel (SAF), and cryogenic fuels such as liquid hydrogen are being considered for use in turbine engines to reduce reliance on hydrocarbon based fuels. Additional improvements in engine efficiencies can be obtained by combining elements of a steam Rankine cycle with the air Brayton cycle of an engine. Water recovered from the exhaust gas flow is vaporized to generate a steam flow that is injected into the air cycle. A substantial amount of thermal energy is needed to transform the water into steam of sufficient temperature to realize efficiency improvement when combined with air in the combustor. Turbine engine manufacturers continue to seek further improvements to engine performance including improvements to thermal, transfer and propulsive efficiencies.

### SUMMARY

According to a first aspect of the invention, an aircraft propulsion system includes a fan section that is rotatable about an axis, a core engine that includes a core flow path where a core airflow is compressed in a main compressor section, communicated to a combustor section, mixed with fuel, and ignited to generate an exhaust gas flow that is expanded through a turbine section. The turbine section is coupled to drive the main compressor section and the fan section through an engine drive shaft, a fuel system that is configured to generate a fuel flow to the combustor, a water recovery system where water from the exhaust gas flow is condensed into a liquid and heated to generate a steam flow, and a flow conditioning system where heat from the steam flow is communicated to the fuel flow prior to injection of the fuel flow into the combustor.

In a further embodiment of the foregoing aircraft propulsion system, the flow conditioning system includes a fuel/steam heat exchanger where thermal energy from the steam is used to heat the fuel flow.

In a further embodiment of any of the foregoing aircraft propulsion systems, the flow conditioning system includes a manifold where the steam flow is mixed with the fuel flow and the mixed steam and fuel flow is injected into the combustor.

In a further embodiment of any of the foregoing aircraft propulsion systems, a portion of the steam flow exhausted from the flow conditioning system is injected into the core airflow upstream of the combustor.

In a further embodiment of any of the foregoing, the aircraft propulsion system further includes a waste heat recovery system that receives at least a portion of the steam flow. The waste heat recovery system includes a turboexpander that is driven by expansion of the steam flow to generate shaft power and the steam flow that is exhausted from the turboexpander is directed to the flow conditioning system.

In a further embodiment of any of the foregoing aircraft propulsion systems, a portion of the steam flow that is exhausted from the turboexpander is directed to the combustor.

In a further embodiment of any of the foregoing aircraft propulsion systems, the waste heat recovery system further includes a pump that is coupled to the turboexpander. The pump is configured to pressurize a flow of water from the water recovery system.

In a further embodiment of any of the foregoing aircraft propulsion systems, the waste heat recovery system further includes a pump that is configured to pressurize a flow of water from the water recovery system.

In a further embodiment of any of the foregoing, the aircraft propulsion system further includes a generator that is coupled to the turboexpander for generating power.

In a further embodiment of any of the foregoing, the aircraft propulsion system further includes a recovery compressor coupled to the turboexpander, wherein the recovery compressor is configured to pressurize a flow of water from the water recovery system.

In a further embodiment of any of the foregoing aircraft propulsion systems, the water recovery system includes a condenser where water from the exhaust gas flow is condensed, a water separator where the condensed water is separated from the exhaust gas flow and an evaporator where extracted water is heated to generate the steam flow.

According to another aspect of the invention, an aircraft turbine engine assembly includes a core engine that includes a core flow path where a core airflow is compressed in a main compressor section, communicated to a combustor section, mixed with fuel, and ignited to generate an exhaust gas flow that is expanded through a turbine section. The turbine section is coupled to drive the main compressor section and a fan section through an engine drive shaft, a fuel system is configured to generate a fuel flow, a water recovery system where water from the exhaust gas flow is condensed into a liquid and heated to generate a steam flow, a turboexpander is driven by expansion of the steam flow to generate shaft power and the steam flow exhausted from the turboexpander is directed to the flow conditioning system. A fuel/steam heat exchanger where heat from the steam flow exhausted from the turboexpander is communicated to the fuel flow prior to injection of the fuel flow into the combustor.

In a further embodiment of the foregoing aircraft turbine engine assembly, a portion of the steam flow exhausted from the fuel/steam heat exchanger is injected into the core airflow upstream of the combustor.

In a further embodiment of any of the foregoing aircraft turbine engine assemblies, a portion of the steam flow exhausted from the turboexpander is directed to the combustor.

In a further embodiment of any of the foregoing, the aircraft turbine engine assembly further includes a recovery compressor that is coupled to the turboexpander. The recovery compressor is configured to pressurize a flow of water from the water recovery system.

In a further embodiment of any of the foregoing, the aircraft turbine engine further includes a generator that is coupled to the turboexpander for generating power.

In a further embodiment of any of the foregoing aircraft turbine engine assemblies, the water recovery system includes a condenser where water from the exhaust gas flow is condensed, a water separator where the condensed water is separated from the exhaust gas flow and an evaporator where extracted water is heated to generate the steam flow.

According to another aspect of the invention, a method of operating an aircraft turbine engine includes recovering water from an exhaust gas flow that is generated by combustion of a fuel flow, generating a steam flow by heating recovered water from the exhaust gas flow, recovering water from the exhaust gas flow includes condensing water from the exhaust gas flow in a condensed, separating the condensed water in a water separator, and generating the steam flow within an evaporator. The fuel flow is heated with at least a portion of the steam flow, and at least a portion of the steam flow is injected into a core flow path.

In a further embodiment of the foregoing, the method further includes expanding the steam flow through a turboexpander prior to generate shaft power and driving a generator with the turboexpander to generate electric power.

In a further embodiment of any of the foregoing, the method further includes pressurizing a portion of extracted water with a recovery compressor driven by the turboexpander and communicating the pressurized water to an evaporator for generating the steam flow.

In a further embodiment of any of the foregoing, the method further includes mixing a portion of the steam flow with the fuel flow prior to injection into a combustor.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example turbine engine including an example waste heat recovery system.
Figure 2 is a schematic view of the example turbine engine and waste heat recovery system.
Figure 3 is a schematic view of another example turbine engine and waste heat recovery system.
Figure 4 is a schematic view of yet another example turbine engine and waste heat recovery system.

### DETAILED DESCRIPTION

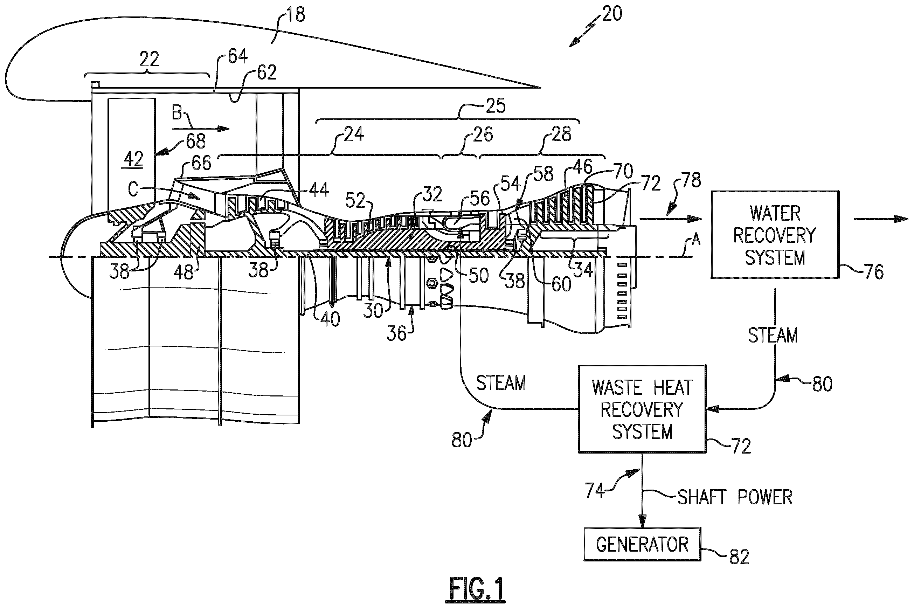

Figure 1 schematically illustrates a turbine engine 20 with a waste heat recovery system 72 that recovers heat from a steam flow 80 generated by a water recovery system 76.

The example gas turbine engine 20 is a turbofan that generally incorporates a fan section 22, and a core engine 25 that includes a compressor section 24, a combustor section 26 and a turbine section 28. The fan section 22 drives air along a bypass flow path B in a bypass duct defined within a nacelle 30. The compressor section 24 drives air along a core flow path C into the compressor section 24 for compression and communication into the combustor section 26. In the combustor section 26, the compressed air is mixed with fuel from a fuel system 100 and burned to generate an exhaust gas flow that expands through the turbine section 28 and is exhausted through exhaust nozzle 36. Although depicted as a turbofan turbine engine in the disclosed non-limiting embodiment, it should be understood that the concepts described herein are not limited to use with turbofans as the teachings may be applied to other types of gas turbine engines, such as prop fans, turboshafts, etc.

The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 68. The fan blades 68 may have a fixed stagger angle or may have a variable pitch to direct incoming airflow from an engine inlet. The fan 42 drives air along a bypass flow path B in a bypass duct 62 defined within a housing 64 such as a fan case or nacelle 18, and also drives air along a core flow path C for compression and communication into the combustor section 26 then expansion through the turbine section 28. A splitter 66 aft of the fan 42 divides the air between the bypass flow path B and the core flow path C. The housing 62 may surround the fan 42 to establish an outer diameter of the bypass duct 62. The splitter 66 may establish an inner diameter of the bypass duct 62.

Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. Moreover, although an example fan section 22 within a nacelle is disclosed by way of example, the fan section may be of an open rotor architecture with a single fan stage, a dual fan stage and/or counterrotating fan stages all of which are within the scope and contemplation of this disclosure. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture.

The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 58 includes airfoils 60 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and the fan 42 may be positioned forward or aft of the location of gear system 48.

The fan 42 may have at least 10 fan blades 68 but no more than 20 or 24 fan blades 68. In the disclosed examples, the fan 42 may have between 12 and 18 fan blades 68, such as, for example, 14 fan blades 68. An exemplary fan size measurement is a maximum radius between the tips of the fan blades 68 and the engine central longitudinal axis A. The maximum radius of the fan blades 68 can be at least 40 inches (1.0 m), or more narrowly no more than 75 inches (1.9 m). For example, the maximum radius of the fan blades 68 can be between 45 inches (1.1 m) and 60 inches (1.5 m), such as between 50 inches (1.3 m) and 55 inches (1.4 m). Another exemplary fan size measurement is a hub radius, which is defined as distance between a hub of the fan 42 at a location of the leading edges of the fan blades 68 and the engine central longitudinal axis A. The fan blades 68 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

In other embodiments, such as in open rotor systems, the fan section 22 may have at least 5 blades 68 but no more than 12 blades 68. In such embodiments, the maximum radius of the fan blades 68 can be about 150 inches (3.81 m).

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 72, and the vanes are schematically indicated at 70.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0.

The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0.

The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 68 alone, without a Fan Exit Guide Vane ("FEGV") system. A distance is established in a radial direction between the inner and outer diameters of the bypass duct 62 at an axial position corresponding to a leading edge of the splitter 66 relative to the engine central longitudinal axis A. The fan pressure ratio is a spanwise average of the pressure ratios measured across the fan blade 68 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R)/(518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 68 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In one example embodiment, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In one example embodiment, the pressure ratio of the high pressure compressor 52 is between 9.0 and 12.0, or more narrowly is between 10.0 and 11.5. In another example embodiment the pressure ratio of the high pressure compressor 52 is between 9 and 30. The OPR can be equal to or greater than 45.0, and can be less than or equal to 70.0, such as between 50.0 and 60.0. In another example embodiment, the OPR is between 35 and 200. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F). The TET may be greater than or equal to 2700.0 °F (1482.2 °C), or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.78 °C), or more narrowly greater than or equal to 800.0 °F (426.7 °C), such as between 900.0 °F (482.2 °C) and 975.0 °F (523.9 °C). The relatively low EGT can be utilized in combination with the other techniques disclosed herein to reduce fuel consumption.

The example engine 20 extracts water from the exhaust gas flow 78 with the water recovery system 76. Thermal energy used to generate the steam flow 80 is recovered in the waste heat recovery system 72. In one example embodiment, the waste heat recovery system 72 uses the heat to generate shaft power 74 and drive a generator 82. Thermal energy recovered in the waste heat recovery system 72 reclaims energy that would otherwise be underutilized as exhaust heat. Converting a portion of this energy to power, which is utilized by the engine or other systems can reduce overall engine fuel burn.

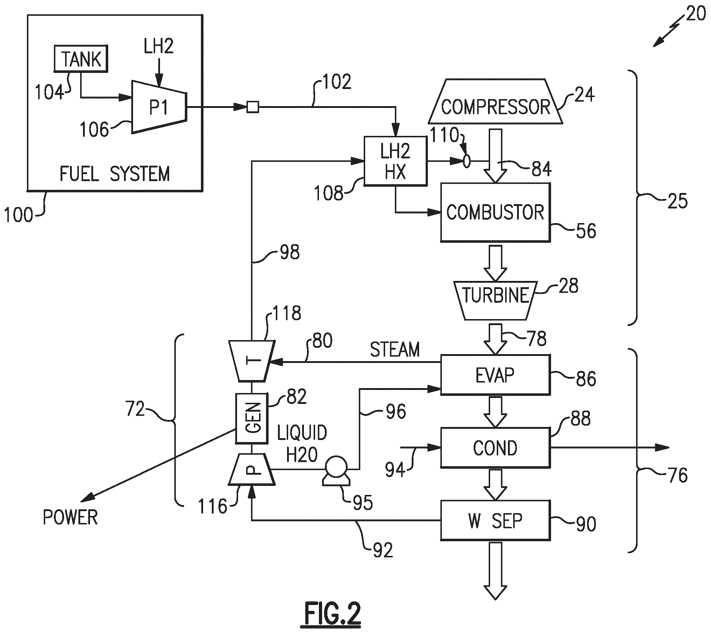

Referring to Figure 2, with continued reference to Figure 1, the example engine assembly 20 is shown schematically and further includes a fuel system 100. In one example embodiment, fuel system 100 provides a liquid fuel that is stored in a tank 104 and pressurized by a pump 106. In one disclosed example, the liquid fuel is a cryogenic hydrogen-based fuel. The hydrogen-based fuel may be hydrogen and/or be derived from hydrogen containing compounds such as ammonia. In another example embodiment, the liquid fuel is a sustainable air fuel (SAF). It should be appreciated that although hydrogen, ammonia and SAF are disclosed by way of example, other liquid fuels could be utilized and are within the scope and contemplation of this disclosure.

The fuel system 100 generates a fuel flow 102 that must be heated prior to injection into the combustor 56. The example engine assembly 20 uses heat from the steam flow 80 to preheat the fuel flow 102.

An example water recovery system 76 includes an evaporator 86, a condenser 88 and a water separator 90. Exhaust gas flow 78 from the core engine 25 is directed serially through the evaporator 86, condenser 88 and the water separator before being exhausted to the ambient environment. The condenser 88 is a heat exchanger that cools the exhaust gas flow 78 with a ram air cooling flow 94. Although ram air cooling flow 94 is disclosed by way of example, other cooling flows may be utilized and are within the contemplation of this disclosure. Water within the exhaust gas flow is condensed in response to cooling and separated from the gas flow in the water separator 90 to generate a water flow 92.

The example waste heat recovery system 72 includes a compressor 116 coupled and driven by a turboexpander 118. In this example embodiment, the turboexpander 118 is also coupled to drive the generator 82 and produce electric power 25. In this example embodiment, water flow 92 is compressed by the compressor to generate a pressurized liquid water flow 96 that is communicated to the evaporator 86. Additionally, or alternatively, a pump 95 could also be utilized to pressurize water communicated to the evaporator 86. The pump 95 may be powered by an electric motor or other device of the engine utilized to create shaft power.

In the evaporator 86, heat from the exhaust gas flow 78 is used to generate the steam flow 80. Accordingly, the evaporator 86 is a heat exchanger that provides for thermal communication between the pressurized water flow 96 and the exhaust gas flow 78, without mixing the two.

The steam flow 80 is communicated to the turboexpander 118. Expansion of the steam flow 80 through the turboexpander 118 creates shaft power used to drive the compressor 116 and the generator 82. Exhausted steam 98 from the turboexpander 118 is still of a pressure and temperature sufficient for injection into the combustor 56.

The exhausted steam 98 is utilized to heat the fuel flow 102 within a fuel/steam heat exchanger 108. In one disclosed embodiment, the fuel/steam heat exchanger 108 maintains separation of the fuel flow 102 and the steam flow 98. Heat from the steam flow 98 is communicated into the fuel flow 102. The fuel flow 102 is then communicated to the combustor 56. In the disclosed example, steam exhausted from the heat exchanger 108 is injected into a core flow 84 upstream of the combustor 56 at an injection location indicated at 110. The injection of the steam flow 98 into the core flow 84 provides for increased efficiency by adding to the mass flow through the turbine section 28 without requiring a corresponding amount of work through the compressor section 24.

In this example embodiment, the steam flow 80 powers the turboexpander 118 and exhausted steam flow 98 heats the fuel flow 102 to recover a significant amount of energy that would otherwise be lost in the engine exhaust.

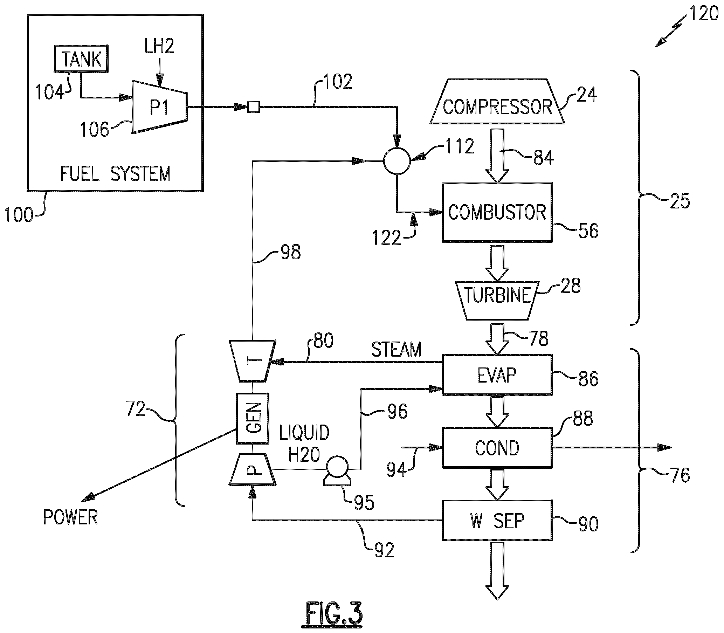

Referring to Figure 3, with continued reference to Figures 1 and 2, another example engine assembly 120 is schematically shown and includes the same basic configuration as that shown in Figure 2. In the example engine assembly 120, the fuel/steam heat exchanger is removed and instead a fluid manifold 112 is used. The fluid manifold 112 allows for mixing of the fuel flow 102 and the steam flow 98. Rather than maintaining separate flows as provided in the fuel/steam heat exchanger 108, the two flows are combined. Combining the two flows 98, 102 effectively heats the fuel flow 102 due to the heat remaining in the steam flow 98. A combined fuel/steam flow 122 provides an increased flow and heating of the fuel flow 102.

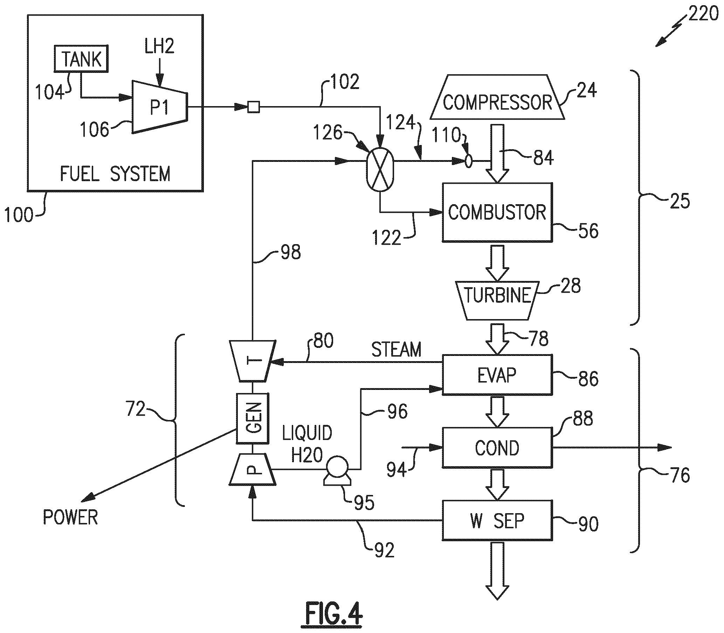

Referring to Figure 4, with continued reference to the previous figures, another example engine assembly 220 is schematically shown and includes a flow-conditioning system 126. The example flow-conditioning system 126 is composed of at least one fluid manifold designed to split a portion of the steam flow 98 to be mixed with fuel 102, creating a mixed fuel-steam flow 122. The flow conditioning system 126 may also include at least one heat exchanger designed to optimize the temperatures of fuel-steam flow 122 and remaining steam flow 124. The mixed fuel/steam flow 122 is still communicated to the combustor 56. The remaining steam flow 124 is injected into the core flow 84 at a location upstream of the combustor 56 indicated at 110.

Accordingly, the example engine embodiments 20, 120 and 220 includes features for using heat from the generation of steam to create shaft power and for heating a fuel flow prior to communication to the combustor 56.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An aircraft propulsion system comprising:
a fan section (22) rotatable about an axis (A);
a core engine (25) including a core flow path (C), in which a core airflow is compressed in a main compressor section (24), communicated to a combustor section (26), mixed with fuel (102), and ignited to generate an exhaust gas flow (78) that is expanded through a turbine section (28), wherein the turbine section (28) is coupled to drive the main compressor section (24) and the fan section (22) through an engine drive shaft (40);
a fuel system (100) configured to generate a fuel flow (102) to the combustor (56);
a water recovery system (76), in which water from the exhaust gas flow (78) is condensed into a liquid (92) and heated to generate a steam flow (80; 98); and
a flow conditioning system (126), in which heat from the steam flow (80; 98) is communicated to the fuel flow (102) prior to injection of the fuel flow (102) into the combustor (56).

2. The aircraft propulsion system as recited in claim 1, wherein the flow conditioning system (126) comprises a fuel/steam heat exchanger (108), in which thermal energy from the steam is used to heat the fuel flow (102).

3. The aircraft propulsion system as recited in claim 1 or 2, wherein the flow conditioning system (126) comprises a manifold, in which at least a portion of the steam flow (80; 98) is mixed with the fuel flow (102), wherein the mixed steam and fuel flow (122) is injected into the combustor (56).

4. The aircraft propulsion system as recited in claim 3, wherein a portion of the steam flow (124) exhausted from the flow conditioning system (126) is injected into the core airflow upstream of the combustor (56).

5. The aircraft propulsion system as recited in any preceding claim, further comprising a waste heat recovery system (72) receiving at least a portion of the steam flow (80), wherein the waste heat recovery system (72) includes a turboexpander (118) driven by expansion of the steam flow (80) to generate shaft power (74) and the steam flow (98) exhausted from the turboexpander (118) is directed to the flow conditioning system (126).

6. The aircraft propulsion system as recited in claim 5, wherein a portion of the steam flow (98) exhausted from the turboexpander (118) is directed to the combustor (56).

7. The aircraft propulsion system as recited in claim 5 or 6, wherein the waste heat recovery system (72) further includes a pump coupled to the turboexpander (118), and the pump (95) is configured to pressurize a flow of water from the water recovery system (76).

8. The aircraft propulsion system as recited in claim 5 or 6, wherein the waste heat recovery system (72) further includes a pump (95) configured to pressurize a flow of water from the water recovery system (76).

9. The aircraft propulsion system as recited in any of claims 5 to 8, further comprising a generator (82) coupled to the turboexpander (118) for generating power.

10. The aircraft propulsion system as recited in any preceding claim, wherein the water recovery system (76) comprises a condenser (88), in which water from the exhaust gas flow (78) is condensed, a water separator (90), in which the condensed water is separated from the exhaust gas flow (78), and an evaporator (86), in which the extracted condensed water is heated to generate the steam flow (80).

11. An aircraft turbine engine assembly (20; 120; 220) comprising:
a core engine (25) including a core flow path (C), in which a core airflow is compressed in a main compressor section (24), communicated to a combustor section (26), mixed with fuel (102), and ignited to generate an exhaust gas flow (78) that is expanded through a turbine section (28), wherein the turbine section (28) is coupled to drive the main compressor section (24) and a fan section (22) through an engine drive shaft (40);
a fuel system (100) configured to generate a fuel flow (102);
a water recovery system (76), in which water from the exhaust gas flow (78) is condensed into a liquid and heated to generate a steam flow (80);
a turboexpander (118), wherein the turboexpander (118) is driven by expansion of the steam flow (80) to generate shaft power (74), and the steam flow (98) exhausted from the turboexpander (118) is directed to a flow conditioning system (126);
and
a fuel/steam heat exchanger (108), in which heat from the steam flow (98) exhausted from the turboexpander (118) is communicated to the fuel flow (102) prior to injection of the fuel flow (102) into the combustor (56),
optionally wherein:
a portion of the steam flow (124) exhausted from the fuel/steam heat exchanger (108) is injected into the core airflow upstream of the combustor (56);
a portion of the steam flow (98) exhausted from the turboexpander (118) is directed to the combustor (56);
the aircraft turbine engine assembly (20; 120; 220) further comprises a recovery compressor (116) coupled to the turboexpander (118), wherein the recovery compressor (116) is configured to pressurize a flow of water from the water recovery system (76);
the aircraft turbine engine assembly (20; 120; 220) further comprises a generator (82) coupled to the turboexpander (118) for generating power; and/or
the water recovery system (76) comprises a condenser (88), in which water from the exhaust gas flow (78) is condensed, a water separator (90), in which the condensed water is separated from the exhaust gas flow (78), and an evaporator (86), in which extracted condensed water is heated to generate the steam flow (80).

12. A method of operating an aircraft turbine engine (20) comprising:
recovering water from an exhaust gas flow (78) generated by combustion of a fuel flow (102);
generating a steam flow (80; 98) within an evaporator (86) by heating recovered water (92) from the exhaust gas flow (78), wherein recovering water from the exhaust gas flow (78) comprises condensing water from the exhaust gas flow (78) in a condenser (88), and separating the condensed water in a water separator (90);
heating the fuel flow (102) with at least a portion of the steam flow (80; 98); and
injecting at least a portion of the steam flow (122; 124) into a core flow path (C).

13. The method as recited in claim 12, further comprising expanding the steam flow (80) through a turboexpander (118) to generate shaft power (74) and driving a generator (82) with the turboexpander (118) to generate electric power.

14. The method as recited in claim 13, further comprising pressurizing a portion of recovered water (92) with a recovery compressor (116) driven by the turboexpander (118) and communicating the pressurized water (96) to an evaporator (86) for generating the steam flow (80).

15. The method as recited in any of claims 12 to 14, further comprising mixing a portion of the steam flow (80; 98) with the fuel flow (102) prior to injection into a combustor (56).
